## Europäisches Patentamt

## European Patent Office

## Office européen des brevets

(11) Veröffentlichungsnummer: **0 1 1 9 442**
**B1**

(12) # EUROPÄISCHE PATENTSCHRIFT

(45) Veröffentlichungstag der Patentschrift:
**24.05.89**

(21) Anmeldenummer: **84101370.9**

(22) Anmeldetag: **10.02.84**

(51) Int. Cl.⁴: **B 07 B 13/00,** B 07 B 13/16, B 65 G 47/18

(54) **Vorrichtung zum Sortieren und Trennen eines Wertstoffgemisches.**

(30) Priorität: **17.02.83 DE 3305369**

(43) Veröffentlichungstag der Anmeldung:
**26.09.84 Patentblatt 84/39**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**DE-B- 2 331 136**
**DE-C- 374 839**
**GB-A- 1 573 533**
**US-A- 2 360 808**

(73) Patentinhaber: **Lindemann Maschinenfabrik GmbH, Erkrather Strasse 401, D-4000 Düsseldorf 1 (DE)**

(72) Erfinder: **Stodt, Eberhard, Am Pflanzenkamp 40, D-4000 Düsseldorf (DE)**
Erfinder: **Kaldenbach, Erwin, Berliner Strasse 58, D-4030 Ratingen (DE)**
Erfinder: **Lapp, Hand-Günter, Gerhard Strasse 71, D-4030 Ratingen (DE)**

(74) Vertreter: **Bergen, Klaus, Dipl.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

**Beschreibung**

Die Erfindung betrifft eine Vorrichtung zum Trennen einer Mischung aus rollfähigen und nicht rollfähigen Bestandteilen in mindestens zwei Fraktionen, mittels eines um seine Längsachse umlaufenden, konisch geformten Drehtellers, dessen Spitze aufwärts zeigt, und einer dem Drehteller vorgeordneten, niveauausgleichenden Rutsche, der ein Dosierer als Einspeisung vorgeordnet ist.

Die Rückgewinnung von Wertstoffen aus Abfällen, insbesondere aus häuslichen Abfällen, wird heute nicht nur allgemein als notwendig angesehen, sondern auch in verschiedenster Art praktiziert bzw. versucht. Nicht zuletzt wegen der regional recht unterschiedlichen Verhältnisse haben sich unterschiedliche Behandlungsmethoden herausgebildet, wobei auch Umweltfaktoren und insbesondere Investitionskosten eine große Rolle spielen.

Von den insgesamt bekannten Verfahren und Vorrichtungen befaßt sich ein Teil mit der Aufbereitung von sogenannten Wertstoffmischungen, die ein vorsortiertes Ausgangsmaterial darstellen, das keine Obst-, Gemüse- oder dgl. Küchenabfälle, Asche und ähnliches mehr enthält. Die am Anfallort vorsortierten und gesondert gesammelten Wertstoffe umfassen im wesentlichen Glas (möglichst ganze Flaschen), Papier, Pappe, Plastikbehälter und -folien, Metalle, Textilien, Holz, Leder und artverwandte Stoffe. Diese Bestandteile liegen als Gemisch vor und werden auch in der sogenannten «grünen Tonne» gesammelt.

Die vorliegende Erfindung befaßt sich mit derartigen Gemischen, die nachfolgend auch als «Wertstoff» bezeichnet werden.

Andererseits sind bei den insgesamt bekannten Sortierverfahren wiederum zwei Gruppen zu unterscheiden, und zwar solche, die mit zerkleinerten, und solche, die mit unzerkleinerten Abfällen bzw. Wertstoffen arbeiten. Die in neuerer Zeit entwickelten Verfahren arbeiten fast ausnahmslos mit einer Vorzerkleinerung, die nicht zuletzt aufgrund des nicht unerheblichen Kraftbedarfs den Maschinen- und Investitionsaufwand beträchtlich erhöht. Darüber hinaus ergeben sich durch die Vorzerkleinerung Probleme hinsichtlich der Lärmemission, Bodenvibrationen, Geruchsentwicklung und der Staubbeseitigung sowie der Verschmutzung der Wertstoffe durch Öffnung von Behältern, deren Restinhalte, wie z.B. Fette, Öle, Farben etc. die Qualität beispielsweise des Wertstoffs Papier erheblich herabsetzen. Es ist auch nicht etwa davon auszugehen, daß der Aufwand der Zerkleinerung in jedem Fall den Wert der geschaffenen Produkte erhöht. Um den Mehraufwand der Vorzerkleinerung gering zu halten, sind die Anlagen nur bei großen Durchsatzleistungen einigermaßen rentabel zu betreiben.

Des weiteren ist darauf hinzuweisen, daß mit der Vorzerkleinerung sich die Verschmutzung der Wertstoffe durch Öffnung von Behältern erhöht, deren Restinhalte, wie z.B. Fette, Öle, Farben etc. die Qualität beispielsweise des Wertstoffs Papier

erheblich herabsetzen. Da bei einer Vorzerkleinerung auch das Glas zerkleinert wird, entstehen Glasstaub und sehr kleine Glassplitter, die beim heutigen Stand der Sortiertechnik nicht vollkommen, beispielsweise aus Papiergemengen, abzuscheiden sind. Das Sortieren der Glasscherben nach Farben ist zwar grundsätzlich gelöst, jedoch ist der maschinelle Aufwand außerordentlich groß und die entsprechende Vorrichtung komplizert bei relativ kleinen Durchsatzmengen/Einheit. Da von den Glasflaschen im Falle ihrer Zerkleinerung praktisch immer ein Restinhalt freigesetzt wird und dieser sich besonders am Papier festsetzt, ergeben sich zudem hygienisch-biologische Probleme, verbunden mit nicht unerheblicher Geruchsentwicklung, so daß Papier aus diesen Anlagen schon heute als «Müllpapier» bezeichnet wird.

Schließlich sei auch noch der nicht unerhebliche Kraftbedarf der Anlagen mit Vorzerkleinerung erwähnt, wodurch nicht zuletzt auch die Standortwahl einer solchen Anlage eingeschränkt wird, da unter Umständen noch weitere Kosten für die Energiezufuhr in Kauf genommen werden müssen.

Das Aufbereiten unzerkleinerter Wertstoffe weist zwar die zuvor genannten Nachteile im wesentlichen nicht auf, war jedoch bisher auch mit erheblichen Problemen verbunden. So wird zwar in der GB-PS 1 573 533 ein relativ einfacher Weg zur Wertstofftrennung dargestellt und beschrieben, der jedoch mit erheblichen Mängeln behaftet ist, die der Grund dafür sind, daß sich diese Art der Aufbereitung als praktikable Lösung nicht durchgesetzt hat. Das zugeführte Wertstoffgemisch fällt dort je nach Schwere mit unterschiedlicher Geschwindigkeit auf ein unter der Zuliefervorrichtung befindliches Sortierband, welches in Förderrichtung stark, beispielsweise unter ca. 40°, ansteigt. Durch den starken Aufprall, der durch Anordnung einer Prallplatte hinter der Bandfläche noch verstärkt werden soll, springen die harten Anteile des Wertstoffgemisches vom Band in eine Sammelschütte, während der Papieranteil auf dem Förderband haften und bis zum Bandende mitgenommen werden soll, wo er ebenfalls gesammelt wird.

Diese Anordnung hat sich für eine saubere Trennung der Gemischanteile als praktisch ungeeignet erwiesen. Der als wesentlich für die Trennwirkung betrachtete Aufprall ist eher störend als nützlich, da dadurch nicht nur ein großer Teil der Glasanteile zu Bruch geht, zersplittert und daher schwer weiterzuverarbeiten ist, sondern zudem die schweren, harten Anteile mit dort gewünscht hoher Energie auf das Band prallen und dort auf die Anteile treffen und diese mindestens teilweise in die verkehrte Richtung mitreißen, die das Band mit nach oben fördern soll, vor allem auf die Papieranteile.

Eine Vorrichtung der eingangs genannten Art ist aus der US-PS 4 068 758 bekannt und benötigt Abstreifer, um haftendes Gut gezielt in speziell vorgesehene Aufnahmen zu bringen. Diese bekannte Vorrichtung ist zum Trennen eines Wertstoffgemisches aus häuslichen Abfällen weder vorgesehen noch geeignet, zumal für die Funktionsfähigkeit dieser bekannten Vorrichtung einerseits eine genügend hohe Zentrifugalkraft und andererseits die erwähnten, mechanischen Abstreifer zum Erreichen des Trennergebnisses unbedingt erforderlich sind. Der Erfindung liegt die Aufgabe zugrunde, eine Vorrichtung zum Sortieren und Trennen eines Wertstoffgemisches in mindestens zwei Fraktionen zu schaffen, die einen einfachen und unanfälligen Aufbau ermöglicht, mit geringem technischen und personellen Aufwand zu betreiben ist und bei größtmöglicher Schonung insbesondere der Glasanteile zu einer sauberen Trennung der gewünschten Wertstoffkomponenten führt.

Erfindungsgemäß wird diese Aufgabe durch eine Vorrichtung mit den im Kennzeichen des Hauptanspruchs angegebenen Merkmalen gelöst.

Durch das Schrägstellen der Kegelachse können erfindungsgemäß die auf das Gut einwirkenden Kräfte in den vom Drehteller durchlaufenen Zonen sich unterschiedlich auf das Gut auswirken und die unterschiedlichen Gleit- und Hafteigenschaften in überraschend einfacher Weise für eine saubere Trennung genutzt werden.

Es hat sich herausgestellt, daß das Ausbreiten des Wertstoffgemisches in einer einlagigen Schicht im Zuführbereich insgesamt für das Verfahren von positivem Einfluß ist, da es eine saubere Trennung in die gewünschten Wertstoffkomponenten im weiteren Verlauf des Verfahrens erheblich fördert. Unter «einlagig» ist hier eine Ablage zu verstehen, bei der das Übereinanderliegen unterschiedlicher Stoffe praktisch vermieden wird. Mehrere Lagen Papier übereinander stellen daher im Rahmen der Erfindung immer noch eine einlagige Ablage dar. Wenn im Rahmen der erfindungsgemäßen Lehre zudem von «niveaugleich» bzw. «niveauausgleichend» gesprochen wird, ist damit eine Übergabe gemeint, die ganz bewußt auf die beim Stand der Technik gewollte Trennung durch Flugeigenschaften der Gemischkomponenten verzichtet, mit der vielmehr erreicht werden soll, daß die vorgesehene, einlagige Zuführung keine störende Verwirbelung erfährt, zumal sich durch weitere, noch zu erläuternde Maßnahmen nach der Erfindung ergibt, daß das Gemisch während des Zuführens unter Ausnutzung der unterschiedlichen Reibungskoeffizienten der Bestandteile vorsortiert, insbesondere in zwei nebeneinander geförderte Teilströme zerlegt wird. Diese Teilströme sollen selbstverständlich bei der Übergabe an die Sortierstrecke hinsichtlich ihrer Vorsortierung erhalten bleiben. Wie bereits erwähnt, sollen mit der Erfindung auch Glasbrüche und/ oder zusätzliche Glaszerstückelungen aus den angegebenen Gründen vermieden werden, so daß sich auch in dieser Hinsicht die niveaugleiche Übergabe vorteilhaft auswirkt. Auf der vorzugsweise horizontalen Zuführung kann der jeweilige Reibungskoeffizient der einzelnen Komponenten dadurch für eine Zerlegung des Gemisches genutzt werden, daß die Zuführung in zur Förderrichtung senkrechter Richtung geneigt erfolgt. Die dadurch verursachten Wirkungen werden unten anhand der erfindungsgemäßen Ausführungen der Vorrichtungen näher erläutert. In wirkungsmäßig gleicher Weise kann auch die vorzugsweise in Förderrichtung ansteigend (geneigt) verlaufende Sortierstrecke in zur Förderrichtung senkrechter Richtung geneigt sein, so daß sich hier Sortiereffekte in für das mit der Erfindung zu erzielende Ergebnis vorteilhafter Weise überlagern.

Wie bereits ausgeführt, stellt die einlagige Zuführung des Gemisches in möglichst dünner Schicht eine der Voraussetzungen dar, um zum gewünschten Trenn- und Sortierergebnis zu kommen. Mit der vorgeschlagenen Vorrichtung wird dies durch den Dosierer als Einspeisung erreicht, mit dem es je nach Wertstoffzusammensetzung möglich ist, durch Anpassung der Aufgabemenge an die Geschwindigkeit der vorzugsweise als Förderband gestalteten Zuführung die Schichtdicke des der Sortierstrecke zuzuführenden Wertstoffs in gewünschter Weise zu regeln bzw. einzustellen.

Mit der erfindungsgemäß vorgesehenen, niveauausgleichenden Rutsche wird nicht nur eine hinsichtlich Staubentwicklung und Lärmemission umweltfreundliche Übergabe von der Zuführung auf die Sortierstrecke erreicht sondern gleichzeitig der mit dem Stand der Technik verbundene Nachteil des unkontrollierbaren Aufpralls mit den eingangs dargelegten Nebenerscheinungen vermieden; die Rutsche wirkt also demgegenüber quasi dämpfend und beruhigend im Sinne «laminarer» Wertstoffübergabe.

Der Radius des sich für die Sortierstrecke als hervorragend geeignet erwiesenen, erfindungsgemäßen Drehtellers entspricht vorzugsweise mindestens der Breite der Zuführung. Dadurch, daß der Drehteller relativ zur mit der Zuführung verbundenen Rutsche außermittig angeordnet ist, wird er vom übergebenen Wertstoffgemisch, das gegebenenfalls vorsortiert ist, außermittig beaufschlagt.

Durch vorteilhafte Ausgestaltungen, wie sie den Unteransprüchen zu entnehmen sind, wird mit der Erfindung ein Vorschlag unterbreitet, der mit seinen vergleichsweise einfachen konstruktiven Mitteln zu einem überraschend hochwertigen Ergebnis führt. So zeichnet sich eine erfindungsgemäß ausgerüstete Anlage insbesondere aus durch geringen Energiebedarf, geringe Belastung der Umwelt hinsichtlich Lärm, Vibration, Gerüchen etc., einfache Anlagetechnik, zu deren Wartung es keiner besonders geschulten Kräfte bedarf, durch Vermeiden ungewollter bzw. nachteiliger Zerkleinerung von Wertstoffen aus dem Haushaltsbereich im Sinne einer hochwertigen Sortierung für die zerbrechlichen Gegenstände, insbesondere Glas umfassende Wertstoffkomponente; durch schonendste Behandlung insbesondere der Glasflaschen in der Sortieranlage bis zur Farbsortierung; durch vergleichsweise reine Wertstoffe als Ergebnis des erfindungsgemäßen Verfahrens, wobei die Verschmutzung auf das unvermeidliche Minimum gesenkt wird, das durch Sammeln und Transport bedingt ist; und schließlich durch die Möglichkeit, auch relativ kleine Anlagen mit rentabler Arbeitsweise für eine Durchsatzleistung von nur z.B. 5 bis 7 t/h zu errichten.

Am Beispiel eines häufig anfallenden und mit der erfindungsgemäßen Vorrichtung vorzugsweise aufzubereitenden Gemisches aus vorwiegend Papier und Flaschen sei nachfolgend der besondere Effekt des erfindungsgemäßen Dreh- bzw. Sortiertellers erläutert. Da die Flaschen zumeist nur eine linien- bis punktförmige Anlage (je nach Längs- oder Querlage) und die Papierstücke demgegenüber eine flächige Anlage auf dem Sortierteller erreichen, haben die Reibungskräfte besonderen Einfluß auf den Sortiereffekt. Sie bestimmen nämlich beim Papier im wesentlichen dessen Mitnahme, während sie auf die Flaschen nur eine geringfügige Wirkung ausüben, so daß diese unter dem Einfluß der ihnen auf dem Zuförderer mitgeteilten kinetischen Energie und unter dem Schwerkrafteinfluß auf der Gefälleseite des Sortiertellers geradewegs ausgetragen werden. Beim Papier wirken die Reibungskräfte stark bremsend, so daß es vor Erreichen des Tellerrandes zunächst in unterschiedlichen Entfernungen von der Mitte des Sortiertellers abgebremst wird und schon währenddessen die Drehbewegung des Tellers mitzumachen beginnt. Der Rand des Sortiertellers wird dabei im Normalfall vom Papier noch nicht erreicht. In dieser Phase beginnt aber auch die Zentrifugalkraft auf das Papier im Sinne einer radialen Bewegungskomponente einzuwirken. Diese Radialbewegung ist desto schneller, je stärker sich in der Gefällezone des Sortiertellers eine Kraftkomponente der Schwerkraft zu Lasten der Reibungskraft zur Zentrifugalkraft addiert. Dadurch verlagert sich der Papierstrom im Anfang seiner Abförderphase radial nach außen – ohne den Tellerrand zu erreichen – so daß er unter dem Zuförderer hinweg, unbeeinflußt und abseits vom zugeförderten neuen Material, weitergefördert wird. In dieser Phase können sich etwa noch vom Papier gebremste Flaschen von diesem lösen und die Tellerfläche herunterrollen. Im Falle der vorzugsweise vorgesehenen räumlichen Schräglage des Sortiertellers verläuft seine Oberfläche vor Erreichen der Abwurfstelle für das Papier besonders flach bis horizontal, so daß sich der Schwerkrafteinfluß zumindest nicht mehr oder nur sehr gering unterstützend auf die Zentrifugalkraft auswirkt, sondern im Gegenteil unter Umständen mehr bremsend oder sogar die Reibkraft erhöhend, so daß in diesem Bereich die Radialbewegung des Papiers zumindest verzögert wird. Sie nimmt aber in der danach wieder stärkeren Gefällezone des Sortiertellers wieder zu, so daß sich das Papier nun schneller dem Rand des Sortiertellers nähert und über dessen Rand hinaus im gewünschten Abwurfbereich abgefördert wird.

Anhand der beiliegenden Zeichnungen, in denen Ausführungsbeispiele schematisch dargestellt sind, wird die Erfindung näher erläutert. Es zeigen:

Fig. 1 ein Ausführungsbeispiel mit einem Drehteller als Sortierstrecke;

Fig. 2 eine Ausführungsmöglichkeit des Drehtellers in Kegelform mit Rutsche, in Richtung des Pfeils II in Fig. 1 gesehen;

Fig. 3 eine andere Ausführungsmöglichkeit des Drehtellers in Form eines Doppelkegels; und

Fig. 4 die Seitenansicht einer Ausführungsform mit quergeneigter Zuführung und Formrutsche, wobei der Drehteller zur Vereinfachung nicht dargestellt ist.

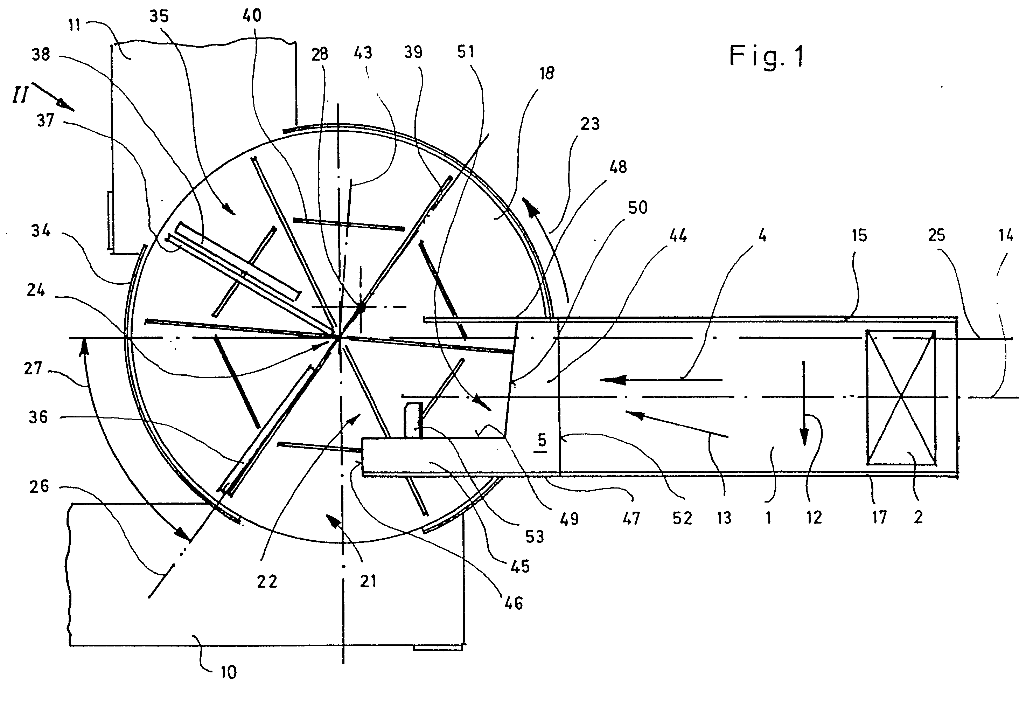

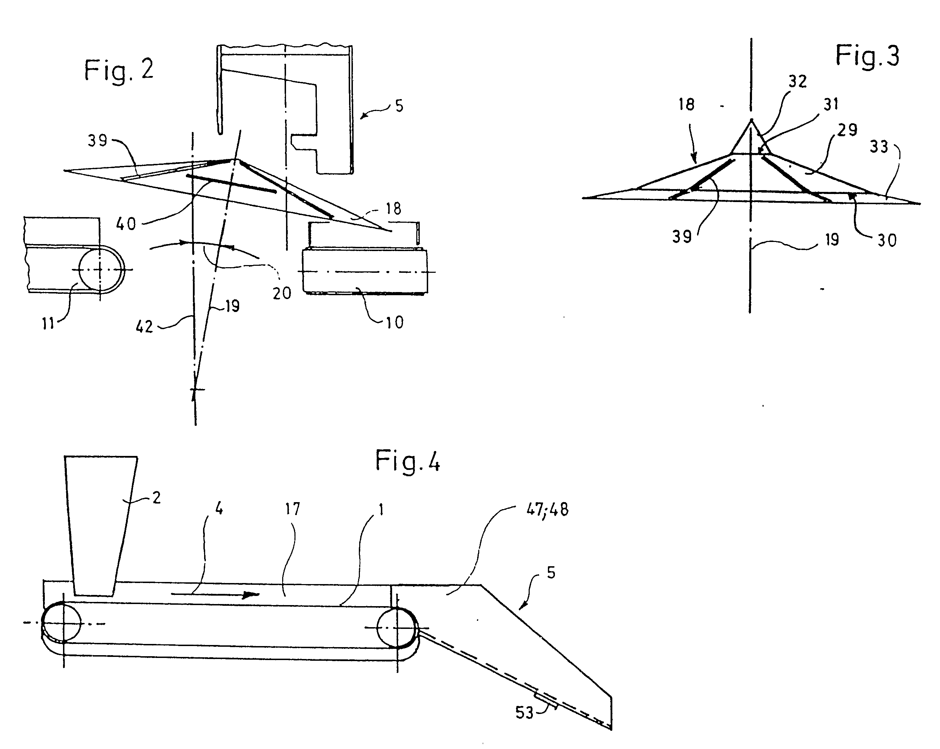

Fig. 1 zeigt eine beispielsweise Ausführungsform der erfindungsgemäßen Vorrichtung. Einer Zuführung 1 in Gestalt eines Förderbandes ist ein – in der Zeichnung nur schematisch dargestellter – Dosierer 2 am Aufgabeende zugeordnet. Ein Drehteller 18, der tiefer liegt als die Zuführung 1, dient als Sortierstrecke. Das mit Hilfe des Dosierers 2 auf der Zuführung 1 verteilte Wertstoffgemisch wird in Richtung des Pfeils 4 gefördert und gelangt am Ende der Zuführung 1 auf eine schräg nach unten führende Rutsche 5 und von dieser auf den Drehteller 18, der hier die zweite Stufe der Sortiervorrichtung darstellt und dessen Symmetrieachse als Drehachse 19 gegenüber der Mittellängsachse 14 der Zuführung 1 seitlich versetzt ist. Der Drehteller 18 kann, wie in Fig. 2 dargestellt, die Form eines Kegels haben, dessen Kegelwinkel beispielsweise zwischen ca. 100° und 170° liegen kann. Zur Sicherstellung der aufgabengemäßen Funktion ist sie meist um einen Winkel 20 gegenüber der Vertikalen so geneigt, daß (Fig. 1) die Kegelmantelfläche im Bereich 21 links von der Zuführung 1 (in Förderrichtung gesehen), dem Abwurfbereich für die schwereren Anteile, am tiefsten liegt. Es gibt allerdings Betriebsbedingungen, bei denen die Drehachse 19 senkrecht steht, der Winkel 20 also 0° beträgt. Im allgemeinen jedoch ist die Dreh- oder Kegelachse 19 um bis zu etwa 25° gegenüber der Vertikalen verschwenkt, wobei die genaue Ausrichtung dem konkreten Einzelfall angepaßt wird.

Zur Festlegung des seitlichen Versatzes des Drehtellers 18 gegenüber der Zuführung 1 wird der Drehteller 18 im Übergabebereich 22 am Ende der Rutsche 5 gegenüber der Mittellängsachse 14 der Zuführung 1 außermittig angeordnet, so daß eine durch die Kegelspitze 24 des Drehtellers 18 gezogene Parallele 25 zur Mittellängsachse 14 von dieser einen Abstand hat, der in Anpassung an die Zusammensetzung des Aufgabeguts gewählt werden kann und im Einzelfall durchaus auch die halbe Breite der Zuführung betragen kann, wobei auch ein die Rutschenbreite unterschreitender Drehtellerradius möglich ist. Außerdem wird die durch die geneigte Dreh- oder Kegelachse 19 verlaufende senkrechte Ebene 26 gegenüber der durch die Mittellängsachse 14 verlaufenden senkrechten Ebene in Drehrichtung (Förderrichtung) 23 des Drehtellers 18 um einen Winkel 27 zwischen 48° und 90° so gedreht, daß die Kegelspitze 24 der Mittelachse 14 näher liegt als der Punkt 28, an dem sich die Kegelspitze 24 bei mit seiner Dreh- oder Kegelsymmetrieachse 19 senkrecht ausgerichtetem Drehteller 18 befände.

Der Drehteller 18 kann auch eine von der beschriebenen abweichende Form haben, beispielsweise die einer Scheibe oder die in Fig. 3 dargestellte. Bei dieser Ausführungsform bildet ein Kegelstumpf 29 mit einer unteren und einer oberen Stirnfläche 30 bzw. 31 den Hauptteil. Auf die obere Stirnfläche 31 ist mit ihr als Grundfläche eine Kegelspitze 32 aufgesetzt, während sich an die untere Stirnfläche 30 ein Rand 33 anschließt, der ebenfalls als Kegelstumpf, jedoch mit einem relativ großen Kegelwinkel bis zu 180°, also quasi als ebene Ringfläche, ausgebildet sein kann. Der Kegelstumpf 29 hat vorteilhaft einen Kegelwinkel zwischen 100° und 170°, die aufgesetzte Kegelspitze 32 einen solchen zwischen 50° und 100°. Die relativ steile Kegelspitze 32 hat sich insbesondere in den Fällen als vorteilhaft erwiesen, in denen ein bereits vorsortiertes Wertstoffgemisch in Form zweier nebeneinanderlaufender Teilströme angeliefert wird. Während Papieranteile, die gelegentlich bis zu der Kegelspitze 32 rutschen, abgebremst werden und dann mit der Telleroberfläche mitwandern, erhalten Flaschen und dgl. einen seitlichen Anstoß und werden sicher abgeworfen.

Um zu verhindern, das auf dem Drehteller 18 abgelegtes Material diesen unkontrolliert verläßt, ist er von einer mit ihm nicht verbundenen, stillstehenden Ringeinfassung 34 umgeben, die vom Drehtellerrand geringes Spiel hat und in den Abwurfbereichen 21 (für schwerere Anteile) und 35 (für Papier und dgl.) in deren Breite soweit eingeschnitten oder unterbrochen ist, daß die Übergabe an dort vorgesehene Förderer reibungslos erfolgen kann. Die Höhe der Ringeinfassung ist nicht kritisch und richtet sich vor allem nach der Zusammensetzung des Wertstoffgemisches. Ein Abweiser 36 für die schwereren Bestandteile wie Flaschen, Kunststoffteile, usw. sowie ein Abstreifer 37 für Papier u.ä. sorgen dafür, daß sämtliches sortierte Gut in die Aufnahmebehälter 10 bzw. 11 gelangt, die hier als Förderbänder konzipiert sind. Um ggf. anhaftendes Papier sicher von der Oberfläche des Drehtellers 18 zu lösen, kann im Abwurfbereich 35 zusätzlich eine Blas- und/oder Absaugvorrichtung 38 vorgesehen sein. Außerdem kann die Oberfläche des Drehtellers 18 zur Verbesserung der Mitnahme von Papier und dgl. mit radialen und/oder quer dazu liegenden Mitnehmern 39 bzw. 40 ausgestattet sein. Die querliegenden Mitnehmer 40 können beispielsweise in etwa halber Radiuslänge von der Kegelspitze 24 entfernt so angebracht werden, daß ihre Mittelsenkrechte Drehtellerradien bzw. Mantellinien 43 sind.

Die Zuführung 1 kann – in Förderrichtung 4 gesehen – horizontal verlaufen oder ansteigen; dies richtet sich wesentlich nach den örtlichen Verhältnissen. Die Steigung in Förderrichtung 4 soll jedoch keinesfalls so stark sein, daß sich leichter rollende oder rutschende Anteile des Wertstoffmischs entgegen der Förderrichtung in Bewegung setzen können. Wesentlich ist auch, daß die nach der Erfindung vorgesehene einlagige Ordnung durch das Ausmaß der Steigung nicht gestört wird.

Bei Verwendung eines Schwingförderers als Zuführung 1 ist es grundsätzlich möglich, eine Querneigung vorzusehen. Durch die systembedingten, die Längsförderung bewirkenden Schwingungen kann die Reibung zwischen den Papieranteilen und der Förderoberfläche allerdings so stark vermindert werden, daß auch diese zur tieferliegenden Seite wandern, so daß die angestrebte Wirkung der Querneigung 12 nicht eintritt. Daher wird erfindungsgemäß der die Förderung in Längsrichtung 4 bewirkenden Schwingung eine entgegen der Querneigung 12 gerichtete Schwingung überlagert, so daß sich ein aus der Mittellängsachse 14 der Zuführung 1 zur höher liegenden Seite hin gedrehter resultierender Fördervektor 13 ergibt.

Vorteilhaft wird der Winkel α, den der Fördervektor 13 mit der Mittellängsachse 14 bildet, zwischen ca. 2° und 15° gewählt. Der Winkel α kann auch mit Vorteil abhängig von Breite und Länge der Zuführung 1 bemessen werden.

Durch die Maßnahme der überlagerten Querschwingungen wird erreicht, daß der überwiegende Teil der leichteren Anteile, insbesondere des Papiers, während der Förderung zum Ende der Zuführung 1 zur höher liegenden Seite wandert, wo es durch eine Seitenwand 15 am Herabfallen gehindert wird, während sich die schwereren Anteile bei geeigneter, wesentlich von der Zusammensetzung des Wertstoffgemisches abhängiger Wahl der Querneigung 12 und dem Winkel 16 des resultierenden Fördervektors 13 zur Mittelachse 14 auf der tieferliegenden Seite der Zuführung 1 sammeln, wo sie ebenfalls durch eine Seitenwand 17 am Herabfallen gehindert werden.

Bei den beschriebenen Ausführungsformen der Erfindung hat es sich als vorteilhaft erwiesen, im Bereich der Wertstoffübergabe 22 die Geschwindigkeit des Drehtellers 18 zwischen etwa 0,15 m/s und höchstens 1,2 m/s festzulegen.

Sehr bewährt hat sich die Rutsche 5 mit der dargestellten besonderen Ausbildung. Sie besteht aus einem im der Zuführung 1 zugekehrten Teil über die Rutschenbreite reichenden Boden 44, der an einer Längsseite in eine Zunge 45 bis zum Rutschenende 46 übergeht. Seitenwände 47 und 48 verhindern das seitliche Herabfallen von Gutteilen. Eine Zungeninnenkante 49 begrenzt zusammen mit einer Bodenvorderkante 50 und der Innenseite der der Zunge 45 gegenüberliegenden Seitenwand 48 eine dem Durchtritt der leichteren Anteile wie Papier und dgl. dienende Aussparung 51. Die abgeschrägte Bodenvorderkante 50 erleichtert dabei das Abkippen der Papieranteile. Mit ihrer aufgabeseitigen Kante 52 wird die Rutsche 5 mit geringstmöglichem Spiel an das Ende der Zuführung 1 so angelegt bzw. angepaßt, daß die Zunge 45 deren tieferliegende Seite praktisch fortsetzt (s.a. Fig. 4).

Ein in die Aussparung 51 ragender Papieranschlag 53 ist in einem Abstand von mindestens etwa 500 mm von der Bodenvorderkante 50 entfernt an der Zunge 45 etwa in der Ebene der Zungenoberfläche angebracht. Er kann entlang der Zungeninnenkante 49 leicht nach oben abgeknickt oder an seiner der Förderrichtung 4 entgegenzeigenden Kante aufgekantet sein; der dabei entstehende Überstand über der Zungenoberfläche sollte 3 bis 5 mm nicht wesentlich übersteigen.

Die sich im Bereich der unteren Seitenwand 17 der Zuführung 1 bewegenden schwereren Anteile werden durch die Rutschenzunge 45 seitlich an der Aussparung 51 und damit am Förderband 41 vorbeigeführt und wandern in einen dafür vorgesehenen Auffangbehälter, zu einem weitergebenden Transportsystem o.ä. Der Papieranteil trifft zu einem großen Teil auf die Aussparung 51 und fällt durch diese hindurch auf den Drehteller und wird in Förderrichtung 54 abtransportiert. Papieranteile im Bereich der Zunge 45 hängen normalerweise über die Zungeninnenkante 49 nach unten durch, stoßen so an den Anschlag 53 und werden dadurch ebenfalls durch die Aussparung 51 abgeworfen. Der beschriebene Überstand des Anschlags 53 bewirkt überdies, daß auch steife Papieranteile wie Pappen, Hefte, usw. abgeworfen werden, auch wenn sie nicht durchhängen.

Insbesondere das Abtrennen der schwereren Anteile des Wertstoffgemischs läßt sich noch verbessern, indem auch der Rutsche 5 eine Querneigung im Sinn der Querneigung 12 der Zuführung 1 gegeben wird. Um zu verhindern, daß ggf. bereits auf der Seite der Aussparung 51 befindliches Papier auf der Rutsche 5 zur Rutschenzunge 45 hin wandert, kann im Bereich des Bodens 44, etwa in der Verlängerung der Zungeninnenkante 49, eine (nicht dargestellte) Leitleiste angebracht werden.

Eine Abwandlung der beiden vorhergehend beschriebenen Ausführungsformen ohne und mit Querneigung der Rutsche 5 ergibt sich, wenn die Zuführung 1 keine Querneigung 12 aufweist. In diesem Fall übernimmt die beschriebene Sonderform der Rutsche 5 als zweite Stufe die Vorsortierung des in der ersten Stufe in einlagiger Schicht aufgebrachten Wertstoffgemisches. Die Wirkung der Rutsche 5 läßt sich noch durch Verschieben des Dosierers 2 zur Zungenseite hin verbessern.

Besonders wirkungsvoll ist erfindungsgemäß die Verwendung des Drehtellers 18 als Folge-(dritte) Stufe. Die Rutschenzunge 45 als am weitesten seitlich von der Kegelspitze 24 der Drehachse 19 entfernter Rutschenteil endet in der Nähe des Abwurfbereichs 21 des Drehtellers 18 für die schwereren Anteile, die durch die Aussparung 51 fallenden Papieranteile wandern in Drehrichtung 23 von der Rutsche 5 weg zum Abwurfbereich 35 für das Papier. Da deshalb keine Anteile mehr unter der Rutsche her bewegt werden, kann diese bis dicht an die Oberfläche des Drehtellers 18 herangeführt werden, was u.a. die Zerkleinerung von Glasanteilen praktisch verhindert.

## Patentansprüche

1. Vorrichtung zum Trennen einer Mischung aus rollfähigen und nicht rollfähigen Bestandteilen in mindestens zwei Fraktionen, mittels eines um seine Längsachse umlaufenden, konisch geformten Drehtellers (18), dessen Spitze aufwärts zeigt, und einer dem Drehteller (18) vorgeordneten, niveauausgleichenden Rutsche (5), der ein Dosierer (2) als Einspeisung vorgeordnet ist, dadurch gekennzeichnet, daß zum Trennen eines Wertstoffgemisches aus häuslichen Abfällen die Kegelachse (19) des Drehtellers (18) parallel zur Mittellängsachse (14) einer zwischen der Rutsche (5) und dem Dosierer (2) angeordneten Zuführung (1) in Förderrichtung um einen Winkel größer als 0 Grad und bis zu 30 Grad zur Vertikalen geneigt ist und die senkrechte Ebene (26) durch die Kegelachse (19) gegenüber der senkrechten Ebene durch die Mittellängsachse (14) der Zuführung (1) in Drehrichtung (23) des Drehtellers (18) um einen Winkel (27) zwischen ca. 30 Grad und 90 Grad gedreht ist.

2. Vorrichtung nach Anspruch 1, gekennzeichnet durch eine schräg zur Förderrichtung (4) verlaufende Übergabekante (7) am der Sortierstrecke (3) zugekehrten Ende der Rutsche (5).

3. Vorrichtung nach Anspruch 1 oder 2, gekennzeichnet durch eine Querneigung (12) der Zuführung (1) etwa senkrecht zu ihrer Förderrichtung (4).

4. Vorrichtung nach Anspruch 3, dadurch gekennzeichnet, daß die Zuführung (1) nur auf einem Teil ihrer Länge quergeneigt ist.

5. Vorrichtung nach Anspruch 3 oder 4, dadurch gekennzeichnet, daß die Querneigung (12) der Zuführung (1) im wesentlichen in dieselbe Richtung zeigt wie die Längsneigung (9) der Sortierstrecke (3) entgegen deren Förder- bzw. Drehrichtung (6 bzw. 23).

6. Vorrichtung nach einem oder mehreren der Ansprüche 3 bis 5, gekennzeichnet durch eine Querneigung (12) der Zuführung (1) von ca. 1,5° bis 10°.

7. Vorrichtung nach einem oder mehreren der Ansprüche 1 bis 6, dadurch gekennzeichnet, daß ein die Zuführung (1) bildender Schwingförderer eine Querneigung (12) aufweist und den die Förderung bewirkenden Schwingungen in Förderrichtung (4) Querschwingungen überlagert sind, die entgegen der Querneigung (12) gerichtet sind.

8. Vorrichtung nach Anspruch 7, dadurch gekennzeichnet, daß beide Schwingungen in einem Fördervektor (13) resultieren, der mit der Mittellängsachse (14) der Zuführung (1) einen Winkel (16) von ca. 2° bis 15° einschließt.

9. Vorrichtung nach einem oder mehreren der Ansprüche 1 bis 8, gekennzeichnet durch einen mindestens der Breite der Zuführung (1) entsprechenden Radius des Drehtellers (18).

10. Vorrichtung nach Anspruch 9, dadurch gekennzeichnet, daß das freie Rutschenende (7; 46) den Außenumfang des Drehtellers (18) zumindest teilweise überragt und/oder die Mittellängsachse (14) der Rutsche (5) den Drehteller (18) in Draufsicht (Fig. 2) außermittig schneidet.

11. Vorrichtung nach einem oder mehreren der Ansprüche 1 bis 10, dadurch gekennzeichnet, daß der Drehteller (18) die Form eines Kegels mit einem zwischen etwa 100° und 170° liegenden Kegelwinkel besitzt und die Kegelachse (19) die Drehachse ist.

12. Vorrichtung nach einem oder mehreren der Ansprüche 1 bis 11, dadurch gekennzeichnet, daß der Drehteller (18) die Form eines rotationssymmetrisch abgestuften Kegels besitzt.

13. Vorrichtung nach einem oder mehreren der Ansprüche 1 bis 12, dadurch gekennzeichnet, daß der Drehteller (18) aus einem Kegelstumpf mit auf die obere, kleinere Stirnfläche aufgesetztem Rohrstück besteht, dessen Längsachse mit der Kegelachse (19) fluchtet.

14. Vorrichtung nach einem oder mehreren der Ansprüche 1 bis 12, dadurch gekennzeichnet, daß der Drehteller (18) die Form eines Doppelkegels (29, 32) besitzt.

15. Vorrichtung nach Anspruch 14, dadurch gekennzeichnet, daß der Drehteller (18) aus einem Hauptteil in Form eines Kegelstumpfes (29) mit einem Kegelwinkel von etwa 100° bis 170° besteht, dessen obere, kleinere Stirnfläche (31) in eine Kegelspitze (32) mit einem Kegelwinkel von ca. 50° bis 100° übergeht.

16. Vorrichtung nach einem oder mehreren der Ansprüche 11 bis 15, dadurch gekennzeichnet, daß sich an die untere größere Stirnfläche (30) des Kegels bzw. Kegelstumpfes (29) ein mit seiner oberen, kleineren Stirnfläche der unteren Stirnfläche (30) des Kegels bzw. Kegelstumpfes (29) entsprechender, ebenfalls die Form eines Kegelstumpfes mit einem Kegelwinkel zwischen ca. 120° bis 180° aufweisender Rand (33) anschließt.

17. Vorrichtung nach einem oder mehreren der Ansprüche 1 bis 16, gekennzeichnet durch eine mittlere Bahngeschwindigkeit der Sortierstrecke (3; 18) im Übergabebereich (22) des Wertstoffgemisches von mindestens 0,15 m/s und höchstens 1,2 m/s.

18. Vorrichtung nach einem oder mehreren der Ansprüche 1 bis 17, dadurch gekennzeichnet, daß im – in Drehrichtung (23) gesehen – vor dem Übergabebereich (22) liegenden Abwurfbereich (21) des Drehtellers (18) für die schwereren Anteile ein Abweiser (36) und in einigem Abstand hinter dem Übergabebereich (22) im Abwurfbereich (35) für die leichten, flächigen Anteile ein Abstreifer (37) vorgesehen ist.

19. Vorrichtung nach Anspruch 18, gekennzeichnet durch eine Blas- und/oder Absaugevorrichtung (38) im Abwurfbereich (35) für Papier und ähnliche Anteile.

20. Vorrichtung nach einem oder mehreren der Ansprüche 1 bis 19, dadurch gekennzeichnet, daß der Rand des Drehtellers (18) einen nach oben gerichteten Überstand von ca. 3 bis 5 mm besitzt.

21. Vorrichtung nach einem oder mehreren der Ansprüche 1 bis 20, dadurch gekennzeichnet, daß der Drehteller (18) von einer stillstehenden, nicht mit ihm (18) verbundenen Ringeinfassung (34) umgeben ist, die in den Abwurfbereichen (21; 35) in deren jeweiliger Breite ausgeschnitten oder unterbrochen ist.

22. Vorrichtung nach einem oder mehreren der Ansprüche 1 bis 21, dadurch gekennzeichnet, daß der Drehteller (18) mit Mitnehmern (39, 40) bestückt ist, von denen eine Gruppe entlang von Mantellinien (43) verläuft, die andere Gruppe etwa eine halbe Mantellinienlänge von der Kegelspitze (24) entfernt mit jeweils einer Mantellinie (43) als Mittelsenkrechte angeordnet ist, daß beide Mitnehmergruppen (39, 40) etwa 2,5 mm bis 10 mm über die Oberfläche des Drehtellers (18) hinausragen und auf der der Drehrichtung (23) zugewandten Seite stufenlos in die Telleroberfläche übergehen.

**Claims**

1. A device for separating a mixture of rollable and non-rollable substances into at least two fractions by means of a conical rotating plate (18), rotating about its longitudinal axis, whose tip points upwards and, arranged in front of the rotating plate (18), a level-equalising chute (5) which is fed from a dispenser (2) arranged ahead of it, characterised in that in order to separate a mixture of valuable materials from domestic waste the cone axis (19) of the rotating plate (18) is parallel to the centre longitudinal axis (14) of a feed (1) arranged between the chute (5) and the dispenser (2) and is inclined to the vertical, in the conveying direction, at an angle larger than 0 degrees and up to 30 degrees, and the vertical plane (26) through the cone axis (19) is rotated relative to the vertical plane through the centre longitudinal axis (14) of the feed (1), in the direction of rotation (23) of the rotating plate (18), through an angle (27) between about 30 degrees and 90 degrees.

2. A device according to claim 1, characterised by a transfer edge (7) running obliquely to the conveying direction (4) at the end of the chute (5) facing the sorting section (3).

3. A device according to claim 1 or claim 2, characterised by the feed (1) having a transverse inclination approximately at right angles to its conveying direction (4).

4. A device according to claim 3, characterised in that the feed (1) is only inclined transversely over part of its length.

5. A device according to claim 3 or claim 4, characterised in that the transverse inclination (12) of the feed (1) points in substantially the same direction as the longitudinal inclination (9) of the sorting section (3) opposite to its conveying or rotating direction (6 or 23).

6. A device according to any one or more of claims 3 to 5, characterised by a transverse inclination (12) of the feed (1) of about 1.5° to 10°.

7. A device according to any one or more of claims 1 to 6, characterised in that an oscillating conveyor forming the feed (1) has a transverse inclination (12) and that the oscillations effecting the conveying in the conveying direction (4) have superimposed on them transverse oscillations which are directed opposite to the transverse inclination (12).

8. A device according to claim 7, characterised in that the two oscillations result in a conveying vector (13) which forms an angle (16) of about 2° to 15° with the centre longitudinal axis (14) of the feed (1).

9. A device according to any one or more of claims 1 to 8, characterised by a radius of the rotating plate (18) corresponding to at least the width of the feed (1).

10. A device according to claim 9, characterised in that the free end of the slide (7; 46) at least partly overlaps the outer circumference of the rotating plate (18) and/or that the centre longitudinal axis (14) of the slide (5) intersects the rotating plate (18) eccentrically when viewed from above (Fig. 2).

11. A device according to any one or more of claims 1 to 10, characterised in that the rotating plate (18) has the form of a cone with a cone angle between about 100° and 170° and the cone axis (19) is the axis of rotation.

12. A device according to any one or more of claims 1 to 11, characterised in that the rotating plate (18) has the form of a rotationally symmetrical, stepped cone.

13. A device according to any one or more of claims 1 to 12, characterised in that the rotating plate (18) comprises a truncated cone having a tubular section attached to the upper, smaller face whose longitudinal axis is aligned with the cone axis (19).

14. A device according to any one or more of claims 1 to 12, characterised in that the rotating plate (18) has the form of a double cone (29, 32).

15. A device according to claim 14, characterised in that the rotating plate (18) comprises a main part in the form of a truncated cone (29) having a cone angle of about 100° to 170° whose upper, smaller face (31) merges into a conical tip (32) having a cone angle of about 50° to 100°.

16. A device according to any one or more of claims 11 to 15, characterised in that connected to the bottom, larger face (30) of the cone or the truncated cone (29) is a rim (33) also having the form of a truncated cone with a cone angle between about 120° and 180° and with its upper, smaller face corresponding to the bottom face (30) of the cone or truncated cone (29).

17. A device according to any one or more of claims 1 to 16, characterised by the sorting section (3; 18) having a mean path speed in the transfer region (22) of the valuable material mixture of at least 0.15 m/s and at most 1.2 m/s.

18. A device according to any one or more of claims 1 to 17, characterised in that – viewed in the direction of rotation (23) – in the discharge region (21) of the rotating plate (18) located before the transfer region (22) a deflector (36) is provided for the heavier fractions and some distance past the transfer region (22), in the discharge region (35), a separator (37) is provided for the light, laminar fractions.

19. A device according to claim 18, characterised by a blowing and/or sucking device (38) for paper and like fractions in the discharge region (35).

20. A device according to any one or more of claims 1 to 19, characterised in that the rim of the rotating plate (18) has an upward projection of about 3 to 5 mm.

21. A device according to any one or more of claims 1 to 20, characterised in that the rotating plate (18) is surrounded by a stationary, annular border (34) which is not connected to it (18) and which is cut out or interrupted in the discharge regions (21; 35) over their respective widths.

22. A device according to any one or more of claims 1 to 21, characterised in that the rotating plate (18) is fitted with carriers (39, 40) of which one group runs along generating lines (43) and the other group is arranged approximately one half of the length of the generating lines from the tip (24) of the cone, each having a generating line (43) as a central normal, and that both groups of carriers (39, 40) project about 2.5 mm to 10 mm above the surface of the rotating plate (18) and on the side facing the direction of rotation (23) merge smoothly with the surface of the plate.

**Revendications**

1. Dispositif pour la séparation d'un mélange de constituants susceptibles de rouler et de constituants non susceptibles de rouler en deux fractions au moins, qui comprend un plateau rotatif en forme de cône, qui tourne autour de son axe longitudinal et dont la pointe est tournée vers le haut, et une goulotte de compensation de niveaux qui est située en amont du plateau rotatif et qui est associée, dans sa partie antérieure, à un appareil de dosage pour l'alimentation, caractérisé en ce que, pour la séparation d'un mélange de matières de valeur provenant de déchets d'origine ménagère, l'axe de cône (19) du plateau rotatif (18) est, parallèlement à l'axe longitudinal médian (14) d'un dispositif d'amenée (1) situé entre la goulotte (5) et l'appareil de dosage (2), incliné par rapport à la verticale, dans le sens du transport, d'un angle supérieur à 0 degré et pouvant atteindre 30 degrés et en ce que le plan vertical (26) qui passe par l'axe du cône (19) est tourné, par rapport au plan qui passe par l'axe longitudinal médian (14) du dispositif d'amenée (1), dans le sens de la rotation (23) du plateau rotatif (18), d'un angle (27) compris entre 30 degrés et 90 degrés.

2. Dispositif selon la revendication 1, caractérisé par un bord de transfert (7) orienté transversalement par rapport à la direction de transport (4) et situé à l'extrémité de la goulotte (5) qui est du côté du trajet de classement (3).

3. Dispositif selon une des revendications 1 ou 2, caractérisé par une inclinaison transversale (12) du dispositif d'amenée (1) dans une direction sensiblement perpendiculaire à la direction de transport (4).

4. Dispositif selon la revendication 3, caractérisé en ce que le dispositif d'amenée (1) n'est incliné dans le sens transversal que sur une partie de sa longueur.

5. Dispositif selon l'une des revendications 3 ou 4, caractérisé en ce que l'inclinaison transversale (12) du dispositif d'amenée (1) est essentiellement dans la même direction que l'inclinaison longitudinale (9) du trajet de classement (3) en sens inverse du sens de transport ou de rotation (6 ou 23).

6. Dispositif selon l'une ou plusieurs des revendications 3 à 5, caractérisé par une inclinaison transversale (12) du dispositif d'amenée (1) qui est de 1,5° à 10° environ.

7. Dispositif selon une ou plusieurs des revendications 1 à 6, caractérisé en ce qu'un transporteur oscillant qui constitue le dispositif d'amenée (1) a une inclinaison transversale (12) et qu'aux oscillations ou vibrations qui provoquent le transport dans le sens (4) du transport se superposent des oscillations ou vibrations transversales dirigées en sens inverse de l'inclinaison transversale (12).

8. Dispositif selon la revendication 1, caractérisé en ce que les deux oscillations ont comme résultante un vecteur de transport qui fait avec l'axe longitudinal médian (14) du dispositif d'amenée (1) un angle (16) de 2° à 15° environ.

9. Dispositif selon l'une ou plusieurs des revendications 1 à 8, caractérisé par un rayon du plateau rotatif (18) au moins égal à la largeur du dispositif d'amenée (1).

10. Dispositif selon la revendication 9, caractérisé en ce que l'extrémité libre (7, 46) de la goulotte dépasse au moins partiellement le contour extérieur du plateau rotatif (18) et/ou que l'axe longitudinal médian (14) de la goulotte (5) coupe dans une position excentrée le plateau rotatif (18) vue par en dessus (figure 2).

11. Dispositif selon une ou plusieurs des revendications 1 à 10, caractérisé en ce que le plateau rotatif (18) a la forme d'un cône dont l'angle de cône est compris entre 100° et 170° environ et dont l'axe de cône (19) constitue l'axe de rotation.

12. Dispositif selon une ou plusieurs des revendications 1 à 11, caractérisé en ce que le plateau rotatif (18) a la forme d'un cône de révolution comportant des gradins.

13. Dispositif selon une ou plusieurs des revendications 1 à 12, caractérisé en ce que le plateau rotatif (18) est constitué par un tronc de cône qui comporte, sur sa surface frontale la plus petite et la plus élevée un élément tubulaire dont l'axe longitudinal est dans le prolongement de l'axe de cône (19).

14. Dispositif selon une ou plusieurs des revendications 1 à 12, caractérisé en ce que le plateau rotatif (18) a la forme d'un cône en deux parties (29, 32).

15. Dispositif selon la revendication 14, caractérisé en ce que le plateau rotatif (18) comprend une partie principale en forme de tronc de cône (29) qui a un angle de cône de 100° à 170° environ et dont la surface frontale (31) qui est la plus petite et la plus élevée se raccorde à une pointe conique (32) qui a un angle de cône de 50° à 100° environ.

16. Dispositif selon une ou plusieurs des revendications 11 à 15, caractérisé en ce qu'à la surface frontale (30) du cône ou du tronc de cône (29) qui est la plus grande et la plus basse se raccorde à un bord (33) qui correspond, par sa surface frontale la plus petite et la plus élevée, à la surface frontale (30) la plus basse du cône ou du tronc de cône (29) et qui a également la forme d'un tronc de cône ayant un angle de cône compris entre 100° et 180° environ.

17. Dispositif selon une ou plusieurs des revendications 1 à 15, caractérisé en ce que la vitesse de transport moyenne sur le trajet de classement (3, 18) dans la zone de transfert (22) du mélange de matières de valeur est de l'ordre de 0,15 m/s au moins et de 1,2 m/s au plus.

18. Dispositif selon une ou plusieurs des revendications 1 à 17, caractérisé en ce que, dans la zone d'éjection (31) du plateau rotatif (18) pour les fractions lourdes qui, dans le sens (23) de la rotation, se trouve en avant de la zone de transfert (18), il comporte un racloir (36) et, à une certaine distance en arrière de la zone de transfert (22) dans la zone d'éjection (35) pour les fractions légères et plates, il comporte un racloir (37).

19. Dispositif selon la revendication 18, caractérisé par un dispositif (38) de soufflage et/ou d'aspiration dans la zone d'éjection du papier et des fractions analogues.

20. Dispositif selon une ou plusieurs des revendications 1 à 19, caractérisé en ce que le bord du plateau rotatif (18) comporte une partie surélevée de 3 à 5 mm.

21. Dispositif selon une ou plusieurs des revendications 1 à 20, caractérisé en ce que le plateau rotatif (18) est entouré par une bordure annulaire (34) fixe qui ne lui (18) n'est pas reliée et qui, dans les zones d'éjection (21, 35) est découpée ou interrompue dans le sens de sa largeur.

22. Dispositif selon une ou plusieurs des revendications 1 à 21, caractérisé en ce que le plateau rotatif (18) comporte des dispositifs d'entraînement (39, 40) dont un groupe est orienté suivant les directrices (43) et dont l'autre groupe se situe au milieu de la longueur de la directrice de la pointe conique (24), ses dispositifs ayant chacun comme médiatrice une directrice (43), en ce que les deux groupes (39, 40) de dispositifs d'entraînement dépassent de 2,5 mm à 10 mm environ au-dessus de la surface du plateau rotatif (18) et, du côté tourné dans le sens (23) de la rotation, se raccordent sans gradins à la surface du plateau rotatif.

Fig. 1

EP 0 119 442 B1

Fig. 3

Fig. 2

Fig. 4

13